# EUROPÄISCHE PATENTSCHRIFT

(11) **EP 3 246 605 B1**
(45) Veröffentlichungstag und Bekanntmachung des Hinweises auf die Patenterteilung: **26.06.2019**
(21) Anmeldenummer: 17169688.3
(22) Anmeldetag: 05.05.2017
(51) Int. Cl.: F16K 31/126, F16K 7/12, F16K 27/02

(54) **MEMBRANVENTIL**
MEMBRANE VALVE
SOUPAPE À MEMBRANE

(30) Priorität: 18.05.2016 DE 102016109129
(43) Veröffentlichungstag der Anmeldung: 22.11.2017
(73) Patentinhaber: GEMÜ Gebr. Müller Apparatebau GmbH & Co. Kommanditgesellschaft, 74653 Ingelfingen (DE)
(72) Erfinder: HILLER, Martin, 74906 Bad Rappenau (DE); HAIDT, Harald, 74613 Öhringen (DE)
(74) Vertreter: DREISS Patentanwälte PartG mbB

(56) Entgegenhaltungen:
- EP-A1- 2 619 494
- EP-A2- 2 843 279
- DE-A1-102014 221 863
- DE-A1-102015 212 997
- FR-A2- 2 438 783
- JP-A- H0 193 674
- JP-A- 2010 266 012

## Beschreibung

Die Erfindung betrifft ein Membranventil nach dem Oberbegriff des Anspruchs 1.

Membranventile mit einer Membran, welche entlang einer Zustellachse zum Öffnen und Verschließen eines Fluidkanals bewegbar ist, sind allgemein bekannt. Beispielhaft wird auf die DE 10 2012 222 062 B3 verwiesen.

EP2619494 offenbart ein Fluidventil, dessen Membran mittels einer Dichtscheibe gegen ein Ventilgehäuse gedrückt wird.

Die Dichtscheibe übt mittels eines Federelements eine Kraft auf den umfangsseitigen Rand der Membran aus.

JP H01 93674 offenbart, dass eine Haltevorrichtung für die Membran mittels Federelemente konstant in Richtung des Ventilgehäuses gedrückt wird, wobei sich zwischen der Haltevorrichtung und dem Ventilgehäuse die Membran befindet. FR2438783 offenbart, dass eine Membran zwischen zwei Elementen eingeklemmt wird. Ein kompressibler Ring ist zwischen der Membran und einem der Elemente angeordnet. Über den Durchmesser eines inneren Elements wird die Anpresskraft des kompressiblen Rings eingestellt. DE102014221863 offenbart eine hammerartige Verdickung einer Membran, welche in entsprechenden Umfangsnuten, welche im Gehäuseunterteil sowie im Gehäuseoberteil angeordnet sind, eingreift. Auf diese Weise wird die Membran am Umfangsrand zusammengepresst und festgehalten und zwischen den Gehäuseteilen fixiert, sodass diese bei der Verlagerung von der Offenstellung in die Schließstellung und zurück oder bei Zwischenstellungen nicht wandert. Kreisringförmige Distanzscheiben scheinen dazu geeignet zu sein, die starre Klemmung der Membran an unterschiedliche Membrandicken anzupassen.

DE102015212997 offenbart ein Membranventil mit einer Membran, welche zwischen einem ersten Klemmabschnitt und einem zweiten Klammerabschnitt verklemmt ist. Der erste Klemmabschnitt stützt sich mittels einer Vorspanneinrichtungen an einem Gegenlagerabschnitt ab. Die Vorspanneinrichtung drückt den ersten Klemmabschnitt in Richtung des zweiten Klemmabschnitts. Der Gegenlagerabschnitt ist starr mit dem zweiten Klemmabschnitt verbunden.

Membrane für Membranventile unterliegen einer nutzungsbedingten Alterung, welche unter anderem durch die Anzahl von Schaltzyklen und Temperaturwechsel beeinflusst wird. Einher mit dieser Alterung geht beispielsweise eine dauerhafte, entropieelastische Verformung der Membran, wodurch die Membran nach einer dauerhaften Belastung und/oder Temperatureinwirkung nicht mehr ihre ursprüngliche Form einnimmt. Hierdurch wird die Dichtheit der Membran nach außen beeinträchtigt, was einen Membranwechsel oder ein Nachziehen der Befestigungsschrauben erforderlich macht.

Mithin ist es Aufgabe der Erfindung, das Nachziehen der Schraubverbindungen zu ersetzen und dabei die Lebensdauer der Membran eines Membranventils nicht negativ zu beeinflussen.

Die der Erfindung zugrunde liegende Aufgabe wird durch ein Membranventil nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Es wird vorschlagen, ein Membranventil derart auszugestalten, dass ein erster, der Zustellachse abgewandter Abschnitt der Membran zwischen einem ersten Klemmabschnitt und einem zweiten Klemmabschnitt verklemmt ist. Der zweite Klemmabschnitt stützt sich mittels einer Vorspanneinrichtung an einem mit dem ersten Klemmabschnitt starr verbundenen Gegenlagerabschnitt ab. Ein zweiter, der Zustellachse zugewandter Abschnitt der Membran ist zwischen einem dritten Klemmabschnitt und einem vierten, mit dem dritten Klemmabschnitt starr verbundenen Klemmabschnitt verklemmt.

So wird vorteilhaft eine starre Verklemmung in den nach innen gelagerten, der Zustellachse zugewandten Abschnitt der Membran verlagert. Eine dynamische Verklemmung der Membran hingegen wird radial außerhalb der starren Verklemmung durchgeführt.

Durch Verklemmung der Membran kann das Material der Membran verfließen. Insbesondere Elastomere, die für Membrane verwendet werden, weisen diese Eigenschaft auf. Die innere starre Verklemmung der Membran wirkt nun für das Material der Membran wie eine Barriere, wodurch sich Membranmaterial, welches sich auf einer der Zustellachse abgewandten Seite der starren Verklemmung befindet, sich nicht in den Fluid-beaufschlagten Bereich der Membran hinein verlagert. So wird insbesondere die Schließfunktion der Membran auch bei deren Alterung nicht durch ungewollte Materialeinträge von außen beeinträchtigt.

Auf der anderen Seite kann durch die dynamische, sich selbst durch die Vorspanneinrichtung nachjustierende Verklemmung mittels des zweiten Klemmabschnitts das Membranmaterial rings um die gebildete Materialbarriere verfließen. Das bedeutet, dass die dynamische äußere Verklemmung häufige Temperaturveränderungen und damit einhergehende temporäre Veränderungen bei der Materialausdehnung der Membran weitgehend kompensiert. Darüber hinaus kann die dynamische Klemmung von sich in Umfangsrichtung ausprägenden Materialverfliesungen sogar profitieren, indem die Dichtheit verbessert wird. Weitergehend können plötzlich auftretende Druckschwankungen im Fluidkanal auftreten, welche in Form von Druckschlägen gegen die Membran wirken. Durch die nach innen verlagerte statische Verklemmung der Membran können diese Druckschläge des Fluids besser abgefangen und kompensiert werden und die Dichtheit während dieser Druckschwankungen wird hierdurch optimiert.

Darüber hinaus ergibt sich eine vorteilhafte Entkopplung was die Auslegung der Vorspanneinrichtung und die Auslegung der Membran angeht. Insbesondere müssen das Membranmaterial und die Dicke der Membran nicht in engen Toleranzbereichen auf die Federkraft und den Federweg der Vorspanneinrichtung abgestimmt werden. Vielmehr wird ermöglicht, dass unterschiedliche Eigenschaften was das Material und die Ausdehnung der Membran angeht bei gleichbleibender Auslegung der Vorspanneinrichtung gewählt werden können.

Insbesondere wird durch die nach innen statische Verklemmung ein Abrollen des nach innen gerichteten Bereichs der Membran über deren Lebensdauer nicht wesentlich verändert. Dies bedeutet insbesondere, dass innerhalb des statisch verklemmten Abschnitts der Membran dauerhaft konstante geometrische Verhältnisse herrschen. Somit wirkt der statisch verklemmte Bereich der Membran ab dem Montagezeitpunkt wie eine Art Materialbremse.

Insgesamt kann durch die so durchgeführte Verklemmung der Membran auf schonende Art und Weise deren Lebensdauer erhöht werden. Gleichzeitig wird die Abdichtung des Fluidführenden Bereichs verbessert. Damit geht einher, dass sowohl der Antrieb schwächer ausgeführt werden kann als das auch die minimale, durch die Vorspanneinrichtung aufgebrachte Federkraft für die dynamische Verklemmung geringer gewählt werden kann.

In einer vorteilhaften Ausführungsform wird der vierte Klemmabschnitt auf einer der Zustellachse zugewandten Seite von einem Bewegungsraum für ein mit der Membran zusammenwirkendes Druckstück begrenzt. Der vierte Klemmabschnitt wird auf einer der Zustellachse abgewandten Seite von einem Bewegungsraum für den zweiten Klemmabschnitt begrenzt. So kann der Vorteil einer erhöhten Lebensdauer der Membran mit einer bauraumgünstigen Anordnung des vierten Klemmabschnitts kombiniert werden.

In einer vorteilhaften Ausführungsform ist der vierte Klemmabschnitt mittels zumindest eines Verbindungsstegs, welcher sich durch eine Öffnung des zweiten Klemmabschnitts erstreckt, starr mit dem Gegenlagerabschnitt verbunden. Somit wird eine Bewegung des zweiten Klemmabschnitts auch bei statisch angeordnetem vierten Klemmabschnitt ermöglicht.

In einer vorteilhaften Ausführungsform umfasst der vierte Klemmabschnitt einen Vorsprung zur Eingrabung in die Membran, wobei der vierte Klemmabschnitt eine sich an den Vorsprung anschließende, der Zustellachse zugewandte im Querschnitt konvexe Kontur umfasst. Durch die so angeordnete konvexe Kontur wird eine statisch angeordnete Abrollkontur für die Membran geschaffen.

In einer vorteilhaften Ausführungsform ist eine entgegen einer Zustellrichtung orientierte Anlagefläche des dritten Klemmabschnitts für die Membran im Querschnitt konvex ausgebildet und springt gegenüber dem ersten Klemmabschnitt vor. So werden ein kleines Klemmvolumen und damit die Barrierenwirkung des Membranmaterials erreicht.

In einer vorteilhaften Ausführungsform ist ein geklemmtes Volumen des ersten, der Zustellachse abgewandten Abschnitts der Membran größer als ein der Zustellachse zugewandtes geklemmtes Volumen des zweiten Abschnitts der Membran. Diese Volumenaufteilung ermöglicht die Barrierenwirkung bei der Klemmung des Materials der Membran in dem zweiten Abschnitt. Darüber hinaus ist im nach außen gewandten, ersten Abschnitt die dynamische und damit temperaturkompensierte Pressung des Materials der Membran möglich.

In einer vorteilhaften Ausführungsform sind der erste und der dritte Klemmabschnitt Teil eines den Fluidkanal umfassenden Ventilkörpers, wobei der Gegenlagerabschnitt mittels eines lösbaren Verbindungsmittels starr mit dem Ventilkörper verbunden ist. Bevorzugt wird so kein Membranmaterial im unmittelbaren Bereich des Verbindungsmittels statisch verklemmt sondern nur radial innerhalb der mittels des ersten und zweiten Klemmabschnitts erreichten dynamischen Klemmung der Membran.

In einer vorteilhaften Weiterbildung wirkt das Verbindungsmittel mit einem Distanzmittel beispielsweise in Form von Distanzscheiben zusammen, um eine Distanz zwischen dem Ventilkörper und dem Gegenlagerabschnitt einzuhalten. So kann bei Verwendung unterschiedlich dimensionierter Distanzmittel die Distanz zwischen Ventilkörper und Gegenlagerabschnitt auf die verwendete Membran angepasst werden.

In einer vorteilhaften Ausführungsform ist ein zweites Distanzmittel zwischen der Vorspanneinrichtung und dem Gegenlagerabschnitt oder zwischen der Vorspanneinrichtung und dem zweiten Klemmabschnitt angeordnet. Damit kann die von dem zweiten Klemmabschnitt ausgehende Klemmwirkung auf die Membran durch Variation der Höhe bzw. Dicke des zweiten Distanzmittels angepasst werden. Insbesondere kann hierdurch erreicht werden, dass ein einziger Antrieb für eine Vielzahl von Membranen, beispielsweise Elastomer-Membrane, kaschierte Membrane oder mehrteilige Membrane, und deren Kennziffern verwendbar ist.

In einer vorteilhaften Ausführungsform ist ein drittes Distanzmittel zwischen dem vierten Klemmabschnitt und dem Gegenlagerabschnitt angeordnet. Damit kann die von dem vierten Klemmabschnitt ausgehende Klemmwirkung auf die Membran durch Variation der Höhe bzw. Dicke des zweiten Distanzmittels angepasst werden. Insbesondere kann hierdurch erreicht werden, dass ein einziger Antrieb für eine Vielzahl von Membranen, beispielsweise Elastomer-Membrane, kaschierte Membrane oder mehrteilige Membrane, und deren Kennziffern verwendbar ist.

Selbstverständlich können das zweite und dritte Distanzmittel auch zusammenfallen und zwischen dem Gegenlagerabschnitt auf der einen Seite und dem vierten Klemmabschnitt und der Vorspanneinrichtung auf der anderen Seite angeordnet sein.

Weitere Merkmale, Anwendungsmöglichkeiten und Vorteile der Erfindung ergeben sich aus der nachfolgenden Beschreibung von Ausführungsbeispielen der Erfindung, die unter Bezugnahme auf die Zeichnung erläutert sind. Für funktionsäquivalente Größen und Merkmale werden in allen Figuren auch bei unterschiedlichen Ausführungsformen die gleichen Bezugszeichen verwendet. In der Zeichnung zeigen:
- Figur 1: eine schematische Schnittansicht eines Membranventils;
- Figur 2: einen Ausschnitt aus Figur 1;
- Figur 3: eine weitere schematische Schnittansicht eines Teils des Membranventils; und
- Figur 4: in einer Explosionsansicht eine Vorspanneinrichtung, zwei Klemmabschnitte und ein Druckstück.

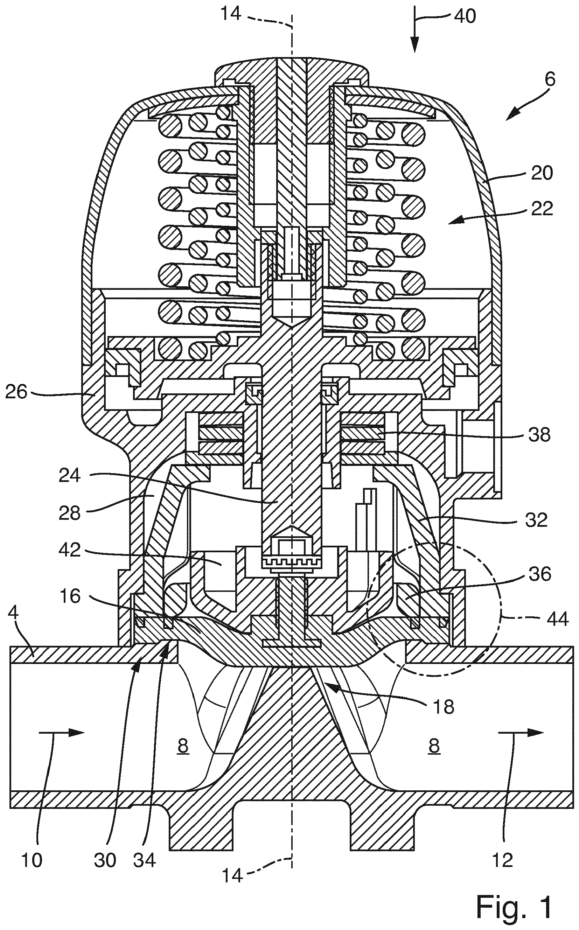

Figur 1 zeigt eine schematische Schnittansicht eines Membranventils 2, welches einen Ventilkörper 4 und einen Ventilaufsatz 6 umfasst. Der Ventilkörper 4 umfasst einen Fluidkanal 8 mit einem Zulauf 10 und einem Ablauf 12. Entlang einer Zustellachse 14 ist eine Membran 16 bewegbar und öffnet und schließt in Zusammenwirken mit einem Ventilsitz 18 den Fluidkanal 8.

Der Ventilaufsatz 6 umfasst einen in einem Antriebsgehäuse 20 angeordneten Antrieb 22, welcher über eine Ventilspindel 24 die Membran 16 entlang der Zustellachse 14 bewegt. In einem als Gegenlagerabschnitt 26 bezeichneten Unterteil ist ein Arbeitsraum 28 vorhanden, welcher getrennt von dem fluidführenden Fluidkanal 8 nicht mit Fluid beaufschlagt ist. Der Ventilaufsatz 6 sowie die darin angeordneten Elemente sind im Wesentlichen rotationssymmetrisch zur Zustellachse 14 ausgebildet. Die Membran 16 hingegen kann in einer Draufsicht entlang der Zustellachse 14 einen im Wesentlichen rechteckigen Umriss aufweisen. Im Bereich von nachgehend erläuterten Verbindungsmitteln weist die Membran 16 Aussparungen auf.

Ein erster, der Zustellachse 14 abgewandter Abschnitt der Membran 16 ist zwischen einem ersten Klemmabschnitt 30 und einem zweiten Klemmabschnitt 32 verklemmt. Ein zweiter, der Zustellachse 14 zugewandter Abschnitt der Membran 16 ist zwischen einem dritten Klemmabschnitt 34 und einem vierten, mit dem dritten Klemmabschnitt starr verbundenen Klemmabschnitt 36 verklemmt. Der zweite Klemmabschnitt 32 ist Büchsen-förmig ausgebildet und stützt sich an dem ersten Klemmabschnitt 26 mittels einer Vorspanneinrichtung 38 an dem Gegenlagerabschnitt 26 ab. Die Vorspanneinrichtung 38 übt eine Federkraft in eine Zustellrichtung 40 aus und drückt damit den zweiten Klemmabschnitt 32 in Richtung des ersten Klemmabschnitts 30 und verklemmt damit die Membran 16 in dem radial äußeren, der Zustellachse 14 abgewandten Abschnitt der Membran 16. Dieser der Zustellachse 14 abgewandten Abschnitt der Membran 16 wird somit mit einer Federkraft beaufschlagt, die auch bei nachlassender Elastizität und/oder dauerhafter Verformung des abgewandten Abschnitts der Membran dafür sorgt, dass der zweite Klemmabschnitt 32 entsprechend nachgestellt wird. Es erfolgt also eine dynamische Klemmung in dem abgewandten Abschnitt der Membran.

Zwischen der Vorspanneinrichtung 38 und dem Gegenlagerabschnitt 26 bzw. zwischen der Vorspanneinrichtung 38 und dem zweiten Klemmabschnitt 32 kann ein nicht gezeigtes zweites Distanzmittel, beispielsweise in Form einer kreisringförmigen Distanzscheibe, angeordnet werden, um die Klemmwirkung an die Höhe oder Beschaffenheit der verwendeten Membran 16 anzupassen. Hierzu stehen Distanzmittel mit verschiedener Höhe zur Verfügung.

Der radial innere, der Zustellachse 14 zugewandte Abschnitt der Membran 16 wird zwischen dem vierten Klemmabschnitt 36, welcher im Betriebsfall starr und damit statisch mit dem dritten Klemmabschnitt 34 verbunden ist, und dem dritten Klemmabschnitt 34 verklemmt. Hierzu ist der vierte Klemmabschnitt 36 starr mit dem Gegenlagerabschnitt 26 verbunden. Zwischen dem vierten Klemmabschnitt 36 und dem Gegenlagerabschnitt 26 kann ein nicht gezeigtes drittes Distanzmittel, beispielsweise in Form einer kreisringförmigen Distanzscheibe, angeordnet werden, um die Klemmwirkung an die Höhe oder Beschaffenheit der verwendeten Membran 16 anzupassen. Hierzu stehen Distanzmittel mit verschiedener Höhe zur Verfügung. Der vierte Klemmabschnitt 36 ist zwischen einem Bewegungsraum für den zweiten Klemmabschnitt 32 und einem Bewegungsraum für ein mit der Ventilspindel 24 fest verbundenes Druckstück 42 angeordnet.

Der erste und der dritte Klemmabschnitt 30 und 34 sind Teil des Ventilkörpers 4, gehen ineinander über und bilden eine im Wesentlichen lotrecht zur Zustellachse 14 orientierte Kreisringfläche. Der zweite und der vierte Klemmabschnitt 32, 36 sind hingegen als separate Bauteile ausgeführt, wobei sich der vierte Klemmabschnitt 36 radial innerhalb des zweiten Klemmabschnitts 32 befindet.

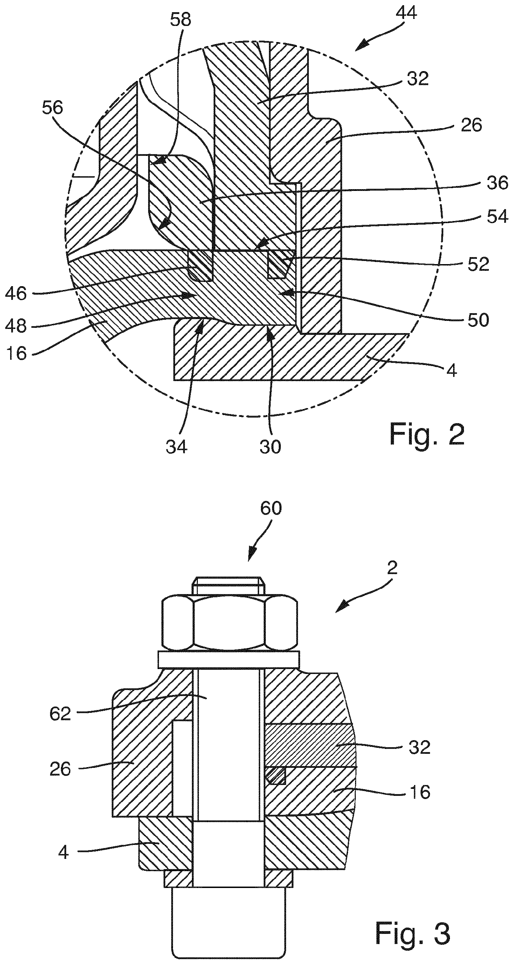

Figur 2 zeigt einen Ausschnitt 44 aus Figur 1. Zur statischen Klemmung der Membran 16 gräbt sich ein Vorsprung 46 des vierten Klemmabschnitts 36 in den der Zustellachse 14 zugewandten zweiten Abschnitt 48 der Membran 16. Der dem Vorsprung 46 gegenüberliegende dritte Klemmabschnitt 34 umfasst eine ringförmige, im gezeigten Schnitt konvexe Anlagefläche für den zweiten Abschnitt 48 der Membran 16. Der sich an den Abschnitt 48 anschließende, der Zustellachse 14 abgewandte erste Abschnitt 50 der Membran 16 ist hinsichtlich des geklemmtes Volumens größer als der zweite Abschnitt 48 und wird zwischen einer gegenüber der Anlagefläche des dritten Klemmabschnitts 34 zurückspringenden Anlagefläche des ersten Klemmabschnitts 30 und dem zweiten Klemmabschnitt 32 verklemmt.

Der zweite Klemmabschnitt 32 umfasst einen der Zustellachse 14 abgewandten Vorsprung 52, der sich in den erste Abschnitt 50 eingräbt. Darüber hinaus umfasst der zweite Klemmabschnitt 32 eine Klemmfläche 54, welche eine ringförmige, dynamische Flächenpressung des ersten Abschnitts 50 bewirkt. Demgegenüber bewirkt der Vorsprung 46 des vierten Klemmabschnitts 36 eine im Vergleich zu dem zweiten Klemmabschnitt 32 stärkere Klemmwirkung auf das Volumen des zweiten Abschnitts 48. Mithin wirkt die Verklemmung zwischen dem dritten und dem vierten Klemmabschnitt 34, 36 wie eine Barriere für das sich in dem ersten Abschnitt 50 befindliche und mittels der ersten und zweite Klemmabschnitte 30, 32 verklemmte Material der Membran 16.

Der vierte Klemmabschnitt 36 umfasst eine im Schnitt konvexe, kreisringförmige Kontur 56, welche sich an den Vorsprung 46 in Richtung der Zustellachse 14 anschließt. Die Kontur 56 geht in eine, im Wesentlichen parallel zur Zustellachse 14 verlaufende Zylinderinnenmantelfläche 58 über.

Figur 3 zeigt eine weitere schematische Schnittansicht eines Teils des Membranventils 2, wobei ein Verbindungsmittel 60 und ein Distanzmittel 62 den Ventilkörper 4 und den Gegenlagerabschnitt 26 starr miteinander verbinden. In nicht gezeigter Form sind vier solcher Verbindungsmittel 60 vorgesehen, um den Ventilkörper 4 mit dem Ventilaufsatz 6 starr zu verbinden. Durch entsprechende Durchgangsbohrungen des Ventilkörpers 4 und des Gegenlagerabschnitt 26 wird zunächst das Distanzmittel 62 in Form einer Distanzhülse geführt, um anschließend das Verbindungsmittel 60 in Form einer Schraubverbindung durch das Distanzmittel 62 geführt auf Block anzuziehen. Durch die mittels des Verbindungsmittels 60 hergestellte starre Verbindung zwischen dem Gegenlagerabschnitt 26 und dem Ventilkörper 4 ist es nicht notwendig, dass auf einer dem vierten Klemmabschnitt 36 abgewandten Seite die Membran 16 zwischen dem Gegenlagerabschnitt 26 und dem Ventilkörper 4 starr verklemmt wird.

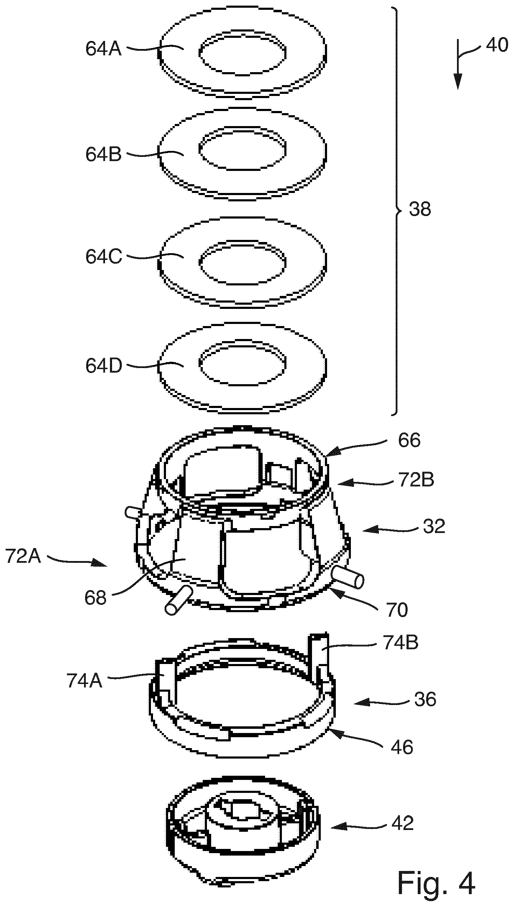

Figur 4 zeigt in einer Explosionsansicht die Vorspanneinrichtung 38, den zweiten Klemmabschnitt 32, den vierten Klemmabschnitt 36 sowie das Druckstück 42. Die Vorspanneinrichtung 38 umfasst eine Anzahl von Tellerfedern 64A bis 64D. Selbstverständlich kann in einer Ausführungsform auch nur eine einzige Tellerfeder 64 in dem Membranventil 2 zum Einsatz kommen.

Ein entgegen der Zustellrichtung 40 orientierter kreisringförmiger Anpressbereich 66 liegt in montierter Position an der Vorspanneinrichtung 38 an und Stege 68 leiten die von der Vorspanneinrichtung 38 stammende Federkraft an einen weiteren ringförmigen Anpressbereich 70 des zweiten Klemmabschnitts 32 weiter. Der ringförmige Anpressbereich 70 liegt an der Membran 16 an dem ersten Abschnitt 50 an.

Zwischen den Stegen 68 des zweiten Klemmabschnitts 32 befinden sich Durchgangsöffnungen 72, durch welche ein jeweiliger Verbindungssteg 74 des vierten Klemmabschnitts 36 geführt wird, um den vierten Klemmabschnitt 36 beispielsweise mittels einer Presspassung zu dem Gegenlagerabschnitt 26 starr festzulegen. Der zweite Klemmabschnitt 32 verjüngt sich zusätzlich entgegen der Zustellrichtung 40, was ein platzsparendes Durchführen der Stege 74 durch die jeweilige Durchgangsöffnung 72 ermöglicht. Durch die starre Festlegung des vierten Klemmabschnitts 36 bewirkt der von dem vierten Klemmabschnitt 36 in Zustellrichtung 40 abragende Vorsprung 46 die starre Klemmung der Membran 16 zwischen dem vierten Klemmabschnitt 36 und dem dritten Klemmabschnitt 34.

Selbstverständlich sind auch andere Verbindungsarten des vierten Klemmabschnitts 36 mit dem Gegenlagerabschnitt 26 denkbar. Beispielsweise kann der vierte Klemmabschnitt 36 sich an dem in Figur 1 gezeigten, sich in Zustellrichtung 40 in den Arbeitsraum 28 hinein erstreckenden Vorsprung des Gegenlagerabschnitts 26 abstützen.

## Patentansprüche

1. Ein Membranventil (2) mit einer Membran (16), welche entlang einer Zustellachse (14) zum Öffnen und Verschließen eines Fluidkanals (8) bewegbar ist, wobei ein erster, der Zustellachse (14) abgewandter Abschnitt (50) der Membran (16) zwischen einem ersten Klemmabschnitt (30) und einem zweiten Klemmabschnitt (32) verklemmt ist, wobei der zweite Klemmabschnitt (32) sich mittels einer Vorspanneinrichtung (38) an einem mit dem ersten Klemmabschnitt (30) starr verbundenen Gegenlagerabschnitt (26) abstützt, **dadurch gekennzeichnet, dass** ein zweiter, der Zustellachse (14) zugewandter Abschnitt (48) der Membran (16) zwischen einem dritten Klemmabschnitt (34) und einem vierten, mit dem dritten Klemmabschnitt (34) starr verbundenen Klemmabschnitt (36) verklemmt ist, und dass der zweite und der vierte Klemmabschnitt (32, 26) als separate Bauteile ausgeführt sind.

2. Das Membranventil (2) nach dem Anspruch 1, wobei der vierte Klemmabschnitt (36) auf einer der Zustellachse (14) zugewandten Seite von einem Bewegungsraum für ein mit der Membran (16) zusammenwirkendes Druckstück (42) begrenzt wird, und wobei der vierte Klemmabschnitt (36) auf einer der Zustellachse (14) abgewandten Seite von einem Bewegungsraum für den zweiten Klemmabschnitt (32) begrenzt wird.

3. Das Membranventil (2) nach dem Anspruch 1 oder 2, wobei der vierte Klemmabschnitt (36) mittels zumindest eines Verbindungsstegs (74A; 74B), welcher sich durch eine Öffnung (72A; 72B) des zweiten Klemmabschnitts (32) erstreckt, starr mit dem Gegenlagerabschnitt (26) verbunden ist.

4. Das Membranventil (2) nach einem der vorstehenden Ansprüche, wobei der vierte Klemmabschnitt (36) einen Vorsprung (46) zur Eingrabung in die Membran (16) umfasst, und wobei der vierte Klemmabschnitt (36) eine sich an den Vorsprung (46) anschließende, der Zustellachse (14) zugewandte konvexe Kontur (56) umfasst.

5. Das Membranventil (2) nach einem der vorstehenden Ansprüche, wobei eine entgegen einer Zustellrichtung (40) orientierte Anlagefläche des dritten Klemmabschnitts (34) für die Membran (16) im Querschnitt konvex ausgebildet ist und gegenüber dem ersten Klemmabschnitt (30) vorspringt.

6. Das Membranventil (2) nach einem der vorstehenden Ansprüche, wobei ein geklemmtes Volumen des ersten, der Zustellachse (40) abgewandten Abschnitts (50) der Membran (16) größer ist als ein der Zustellachse (14) zugewandtes geklemmtes Volumen des zweiten Abschnitts (48) der Membran (16).

7. Das Membranventil (2) nach einem der vorstehenden Ansprüche, wobei der erste und der dritte Klemmabschnitt (30, 34) Teil eines den Fluidkanal (8) umfassenden Ventilkörpers (4) sind, und wobei der Gegenlagerabschnitt (26) mittels eines lösbaren Verbindungsmittels (60) starr mit dem Ventilkörper (4) verbunden ist.

8. Das Membranventil (2) nach dem Anspruch 7, wobei das Verbindungsmittel (60) mit einem Distanzmittel (62) zusammenwirkt, um eine Distanz zwischen dem Ventilkörper (4) und dem Gegenlagerabschnitt (26) einzuhalten.

9. Das Membranventil (2) nach dem Anspruch 8, wobei ein zweites Distanzmittel zwischen der Vorspanneinrichtung (38) und dem Gegenlagerabschnitt (26) oder zwischen der Vorspanneinrichtung (38) und dem zweiten Klemmabschnitt (32) angeordnet ist.

10. Das Membranventil (2) nach dem Anspruch 9, wobei ein drittes Distanzmittel zwischen dem vierten Klemmabschnitt (36) und dem Gegenlagerabschnitt (26) angeordnet ist.

## Claims

1. A diaphragm valve (2) having a diaphragm (16) which can be moved along an axis of advance (14) to open and close a passage (8) for fluid, a first portion (50) of the diaphragm (16), which is remote from the axis of advance (14), being clamped between a first clamping portion (30) and a second clamping portion (32), the second clamping portion (32) being supported, by means of a preloading means (38), against an abutment portion (26) which is rigidly connected to the first clamping portion (30), **characterised in that** a second portion (48) of the diaphragm (16), which is adjacent the axis of advance (14), is clamped between a third clamping portion (34) and a fourth clamping portion (36), which latter is rigidly connected to the third clamping portion (34), and **in that** the second and fourth clamping portions (32, 26) take the form of separate components.

2. The diaphragm valve (2) according to claim 1, wherein, on a side adjacent the axis of advance (14), the fourth clamping portion (36) is bounded by a space for movement of a pressure-applying piece (42) which co-operates with the diaphragm (16), and wherein, on a side remote from the axis of advance (14), the fourth clamping portion (36) is bounded by a space for movement of the second clamping portion (32).

3. The diaphragm valve (2) according to claim 1 or 2, wherein the fourth clamping portion (36) is rigidly connected to the abutment portion (26) by means of at least one connecting pillar (74A; 74B) which extends through an opening (72A; 72B) in the second clamping portion (32).

4. The diaphragm valve (2) according to one of the preceding claims, wherein the fourth clamping portion (36) comprises a projection (46) to be embedded in the diaphragm (16), and wherein the fourth clamping portion (36) comprises a convex outline shape (56), adjacent the axis of advance (14), which follows on from the projection (46).

5. The diaphragm valve (2) according to one of the preceding claims, wherein a surface of the third clamping portion (34) for contact with the diaphragm (16), which surface faces in the opposite direction to a direction of advance (40), is of a convex form in cross-section and projects relative to the first clamping portion (30).

6. The diaphragm valve (2) according to one of the preceding claims, wherein a clamped volume of the first portion (50) of the diaphragm (16), which first portion (50) is remote from the axis of advance (40), is larger than a clamped volume of the second portion (48) of the diaphragm (16), which second portion (48) is adjacent to the axis of advance (14).

7. The diaphragm valve (2) according to one of the preceding claims, wherein the first and third clamping portions (30, 34) are part of a valve body (4) which comprises a passage (8) for fluid, and wherein the abutment portion (26) is rigidly connected to the valve body (4) by means of a releasable connecting means (60).

8. The diaphragm valve (2) according to claim 7, wherein the connecting means (60) co-operates with a spacing means (62) to maintain a spacing between the valve body (4) and the abutment portion (26).

9. The diaphragm valve (2) according to claim 8, wherein a second spacing means is arranged between the preloading means (38) and the abutment portion (26) or between the preloading means (38) and the second clamping portion (32) .

10. The diaphragm valve (2) according to claim 9, wherein a third spacing means is arranged between the fourth clamping portion (36) and the abutment portion (26).

## Revendications

1. Soupape à diaphragme (2) avec un diaphragme (16) pouvant être déplacé le long d'un axe d'avance (14) afin d'ouvrir et fermer un canal de fluide (8), dans laquelle une première section (50), détournée de l'axe d'avance (14), du diaphragme (16) est enserrée entre une première section de serrage (30) et une deuxième section de serrage (32), dans laquelle la deuxième section de serrage (32) s'appuie au moyen d'un dispositif de précontrainte (38) contre une section de butée (26) reliée de manière rigide à la première section de serrage (30), **caractérisée en ce qu'**une deuxième section (48), tournée vers l'axe d'avance (14), du diaphragme (16) est enserrée entre une troisième section de serrage (34) et une quatrième section de serrage (36) reliée de manière rigide à la troisième section de serrage (34), et **en ce que** les deuxième et quatrième sections de serrage (32, 26) sont réalisées sous forme de composants séparés.

2. Soupape à diaphragme (2) selon la revendication 1, dans laquelle la quatrième section de serrage (36) est limitée, sur un côté tourné vers l'axe d'avance (14), par un espace de déplacement destiné à une pièce de pression (42) coopérant avec le diaphragme (16), et dans laquelle la quatrième section de serrage (36) est limitée, sur un côté détourné de l'axe d'avance (14), par un espace de déplacement destiné à la deuxième section de serrage (32) .

3. Soupape à diaphragme (2) selon la revendication 1 ou 2, dans laquelle la quatrième section de serrage (36) est reliée de manière rigide à la section de butée (26) au moyen d'au moins un ergot de liaison (74A; 74B) s'étendant à travers une ouverture (72A; 72B) de la deuxième section de serrage (32).

4. Soupape à diaphragme (2) selon l'une quelconque des revendications précédentes, dans laquelle la quatrième section de serrage (36) comprend une saillie (46) destinée à être enfouie dans le diaphragme (16) et dans laquelle la quatrième section de serrage (36) comprend un contour convexe (56) tourné vers l'axe d'avance (14) et se raccordant à la saillie (46).

5. Soupape à diaphragme (2) selon l'une quelconque des revendications précédentes, dans laquelle une surface d'installation, orientée à l'encontre d'une direction d'avance (40) et destinée au diaphragme (16), de la troisième section de serrage (34) est réalisée de manière convexe en coupe transversale et fait saillie à l'encontre de la première section de serrage (30).

6. Soupape à diaphragme (2) selon l'une quelconque des revendications précédentes, dans laquelle un volume enserré de la première section (50) détournée de l'axe d'avance (40) du diaphragme (16) est supérieur au volume enserré, tourné vers l'axe d'avance (14), de la deuxième section (48) du diaphragme (16).

7. Soupape à diaphragme (2) selon l'une quelconque des revendications précédentes, dans laquelle les première et troisième sections de serrage (30, 34) font partie d'un corps de soupape (4) comprenant le canal de fluide (8), et dans laquelle la section de butée (26) est reliée de manière rigide au corps de soupape (4) grâce à un moyen de liaison (60) amovible.

8. Soupape à diaphragme (2) selon la revendication 7, dans laquelle le moyen de liaison (60) coopère avec un moyen d'entretoisement (62) afin de maintenir une distance entre le corps de soupape (4) et la section de butée (26) .

9. Soupape à diaphragme (2) selon la revendication 8, dans laquelle un second moyen d'entretoisement est agencé entre le dispositif de précontrainte (38) et la section de butée (26) ou entre le dispositif de précontrainte (38) et la deuxième section de serrage (32).

10. Soupape à diaphragme (2) selon la revendication 9, dans laquelle un troisième moyen d'entretoisement est agencé entre la quatrième section de serrage (36) et la section de butée (26).
